# EUROPÄISCHE PATENTSCHRIFT

(11) **EP 1 170 843 B1**
(45) Veröffentlichungstag und Bekanntmachung des Hinweises auf die Patenterteilung: **13.10.2004**
(21) Anmeldenummer: 01106312.0
(22) Anmeldetag: 15.03.2001
(51) Int. Cl.: H02G 3/04

(54) **Elektroinstallationswellrohr**
Corrugated tube for electrical installation
Tube ondulé pour installation électrique

(30) Priorität: 04.07.2000 DE 10032307
(43) Veröffentlichungstag der Anmeldung: 09.01.2002
(73) Patentinhaber: FRÄNKISCHE ROHRWERKE GEBR. KIRCHNER GmbH & Co KG, D-97486 Königsberg (DE)
(72) Erfinder: Krauss, Manfred, 97265 Hettstadt (DE); Neubauer, Tilo, 97486 Königsberg (DE); Schröter, Sören, 96106 Ebern (DE)
(74) Vertreter: Schwabe - Sandmair - Marx

(56) Entgegenhaltungen:
- DE-A- 2 104 294
- DE-A- 2 127 646
- PATENT ABSTRACTS OF JAPAN vol. 1997, no. 11, 28. November 1997 (1997-11-28) & JP 09 184581 A (FURUKAWA ELECTRIC CO LTD:THE), 15. Juli 1997 (1997-07-15)
- PATENT ABSTRACTS OF JAPAN vol. 2000, no. 04, 31. August 2000 (2000-08-31) & JP 2000 028082 A (TOTAKU KOGYO KK), 25. Januar 2000 (2000-01-25)

## Beschreibung

Die Erfindung betrifft ein Elektroinstallationswellrohr mit einem Rohrkörper mit Wellungen mit Wellentälern und Wellenbergen gemäß dem Oberbegriff des Patentanspruchs 1 sowie ein Verfahren zu dessen Herstellung gemäß dem Patentanspruch 6.

Derartige Elektroinstallationswellrohre sind prinzipiell bekannt und werden insbesondere auch in der Automobilindustrie eingesetzt, um isolierte Kabel beispielsweise in der Form von Kabelbäumen aufzunehmen und diese Wellrohre sollen die Kabel zum Einen schützen und sollen zum Anderen den Motorraum optisch ordnen.

Es hat sich nun gezeigt, dass trotz der Verwendung dieser Schutzrohre immer wieder Störfälle aufgetreten sind, bei denen die isolierten Kabel kurzgeschlossen wurden. Untersuchungen haben ergeben, dass Kabelisolationen durchgescheuert wurden, so dass die freigelegten Kabelseelen einen Kurzschluss erzeugten.

Ein solcher Kurzschluss hat regelmäßig den Ausfall einer Maschine oder eines Fahrzeuges zur Folge, dass über den entsprechenden Kabelbaum bzw. die beschädigten Kabel mit Energie versorgt wird bzw. gesteuert wird. Insbesondere wenn ein Fahrzeug in voller Fahrt ist, und ein solcher Fehler auftritt, kann es zu sehr gefährlichen Situationen kommen. Auch ist es, selbst wenn diese Gefahrensituation außer Acht gelassen wird, sehr aufwändig, die beschädigten Kabel aus dem Fahrzeug zu entfernen und durch eine neue Verkabelung zu ersetzen.

Nun könnte natürlich anstelle der Verwendung von Wellrohren wiederum auf die Verwendung von Glattrohren zurückgegriffen werden, um Kabel zu schützen. Jedoch neigen Glattrohre dazu, im Bereich des Motorraumes bei engen räumlichen Verhältnissen abzuknicken. Es können dementsprechend ebenfalls Beschädigungen auftreten. Zudem ist der Motorraum optisch in keiner Weise so schön anzusehen, wenn Glattrohre verwendet werden, wie wenn flexible Wellrohre eingesetzt werden, die nicht abknicken.

Die DE-A-21 27 646 betrifft ein dünnwandiges Kunststoffrohr, in dessen gewellter Wandung zumindest angenähert zylindrische Wandteile mit nach außen gebauchten Umfangssicken abwechseln.

Es ist demzufolge die Aufgabe gemäß der vorliegenden Erfindung, einen Kabelschutz insbesondere für die Fahrzeugindustrie, aber auch für sonstige Maschinen zur Verfügung zu stellen, bei dem bei Verwendung von Wellrohren für Elektroinstallationen die oben genannten Probleme nicht auftreten.

Die obige Aufgabe wird gemäß der Erfindung durch die Merkmale im kennzeichnenden Teil des Patentanspruchs 1 bzw. 6 gelöst.

Zweckmäßige Ausführungsformen gehen aus den Unteransprüchen hervor.

Die gemäß der Erfindung zu erzielenden Vorteile beruhen darauf, dass die Wellentäler mit einem in Axialrichtung des Rohrkörpers erstreckten umfänglichen Flachbereich versehen sind. Auf diese Weise sind die Kabel im Wellrohr an dessen Innenumfang großflächig abgestützt, so dass auch über große Zeiträume hinweg ein Abrieb der Kabelisolationen nicht auftreten kann, der letztendlich dazu führen würde, dass die Kabelseele freigelegt wird, so dass benachbarte Kabel einen Kurzschluss erzeugen können. Es hat sich gezeigt, dass in den Motorräumen von Kraftfahrzeugen und insbesondere von Dieselkraftfahrzeugen Vibrationen auftreten, die zu einem Abrieb der elektrischen Kabel bei üblichen Wellrohre führen können, bei denen gerade die Wellentäler sehr eng bzw. schmal ausgebildet sind, um dem Wellrohr eine höhere Flexibilität zu verleihen.

Gemäß der Erfindung hat sich nun gezeigt, dass, um einen Abrieb der Kabelisolation zu vermeiden, die Wellentäler einen Flachbereich aufweisen müssen, so dass es zu keinen punktuellen Belastungen einer Kabelisolation bei Vibrationen, Bewegungen, oder dgl. kommen kann. Dabei ist es natürlich nicht ausreichend, wenn die Wellentäler lediglich breiter aber nichtsdestotrotz rund ausgeführt sind. Es ist jedenfalls erforderlich, definitiv in Axialrichtung ausgerichtete ebene Bereiche umfänglich am Innenumfang des Wellrohres vorzusehen.

Eine Möglichkeit zur Herstellung eines solchen Rohres besteht darin, ein entsprechendes Rohr in einem Korrugator zu formen. Dabei muss der Korrugator dementsprechend Kokillen bzw. Halbformen aufweisen, die eine entsprechende Ausformung der Wellentäler ermöglichen. Natürlich können insbesondere auch kürzere Elektroinstallationswellrohre gemäß der Erfindung mittels einer Spritzgussform oder mittels anderer herkömmlicher Methoden hergestellt werden. Die Herstellung mittels eines Korrugators ist jedoch kostengünstig und entsprechende Wellrohre gemäß der Erfindung können endlos hergestellt werden.

Es ist vorteilhaft, die Wellungsflanken des erfindungsgemäßen Elektroinstallationswellrohres steil auszubilden, um trotz der erforderlichen breiten und am Innenumfang ebenen Wellungstäler noch hinreichend Raum zur Verfügung zu haben um ausreichende Wellenberge zur Verfügung stellen zu können. Dabei sollten die Wellungsflanken ausgehend von der Längserstreckungsrichtung in einem rechten Winkel hierzu radial nach außen erstreckt sein. Die Wellungsflanken sollten von diesem rechten Winkel vorteilhaft weniger als ungefähr 8° abweichen, d.h. sich mit einem Winkel von ungefähr 82° oder mehr, bis hinauf zu 90° oder eventuell mehr, beispielsweise 92, 94 oder gar 100° erstrecken. Da jedoch die Entformung aus den Formbacken des Korrugators bei Winkeln von mehr als 90° in Bezug auf die Längserstreckungsrichtung bzw. mehr als 0° in Bezug auf die Radialerstreckungsrichtung Probleme bereitet, werden Winkel für die Wellungsflanken in dem Bereich von 82 bis 90 bzw. von 8 bis 0° günstig sein, um einerseits ausreichend Raum für ein weit erstrecktes Wellental und andererseits genügend Platz für ausreichend Flexibilität verleihende Wellenberge zur Verfügung zu stellen.

Prinzipiell reicht es aus, den gemäß der Erfindung vorzusehenden Flachbereich am Innenumfang des Wellrohres bzw. an den Wellentälern wenigstens dort vorzusehen, wo die Elektrokabel das Rohr berühren bzw. an dem Rohr innen anliegen. Dementsprechend ist es prinzipiell ausreichend, wenigstens über einen Teilumfang des Rohrkörpers den Flachbereich vorzusehen. Da jedoch die Lage der Elektrokabel innerhalb des Wellrohres gemäß der Erfindung meist unbestimmt sein wird, sollte der Flachbereich über den gesamten Umfang des Wellrohres in vorteilhafter Weise vorgesehen sein.

Besonders vorteilhaft ist es, wenn die Breite eines Wellentales zu der Breite eines Wellenberges ein Verhältnis von 1 : 1 oder mehr, beispielsweise 1,5 : 1,2 : 1, usw., hat. Dabei sollte die Höhe eines Wellenberges bzw. die Flankenhöhe einer Wellung wenigstens 1 mm betragen und zwar abhängig von der Nennweite des Wellrohres. Ein Wellenberg mit einer Höhe von 1 mm dürfte beispielsweise für Wellrohre mit einer Nennweite von 7,5 - 10 mm in etwa ausreichend sein, um die nötige Flexibilität zur Verfügung zu stellen. Als Richtwert für die Höhe des Wellenberges kann in etwa eine Höhe von ca. 6/100 bis etwa 25/100 der Nennweite des Wellrohres angesehen werden. Abweichungen nach oben oder unten von bis zu 10% ergeben immer noch eine ausreichende Flexibilität, jedoch ist eine optimierte Flexibilität in dem genannten Bereich vorwiegend gegeben.

Ein Elektroinstallationswellrohr gemäß der Erfindung weist in den Wellentälern jeweilige Materialanhäufungen, mindestens aber zwei Materialhäufungen auf. Die Materialanhäufungen nehmen dabei ausgehend von einer Wellenflanke in ihrer Dicke zu, um dann in Richtung auf die nachfolgende Wellentalflanke zu in ihrer axialen Dicke wieder abzunehmen. Dabei wird am Innendurchmesser bzw. am Innenumfang des Wellrohres gemäß der Erfindung wiederum ein umfänglicher Flachbereich vorgesehen, der wenigstens nahezu flach ist, jedenfalls aber wesentlich flacher ist, als dies gemäß dem Stand der Technik regelmäßig festzustellen ist. Auch hier gelten die voranstehend genannten Verhältnisse, um auf diese Weise verhindern zu können, dass sich umfänglich sehr schmale Anlagebereiche zwischen Kabeln und der Wellrohrwandung ergeben können. Um dieses Ergebnis zu erzielen, werden die Formbacken, die an einem Korrugator einen Formkanal bilden, entsprechend strukturiert, d.h., die Außenform der Materialanhäufung ist durch die entsprechende Form Formbacken vorgeben.

Es ist auch möglich, die Materialanhäufung innerhalb des Wellentales anders zu verteilen, um das hier unterzubringende Kunststoffmaterial zielgerichtet zu verteilen, so dass sich wiederum ein innenumfänglicher Flachbereich ausbilden lässt. Erfindungsgemäß muss die Materialanhäufung an den jeweiligen Rändern eines Wellentales dicker sein und zur Mitte des Wellentales abnehmen, so dass sich im axialen Längsschnitt gesehen zwei Materialanhäufungen ergeben. Auf diese Weise kann einerseits der gewünschte Flachbereich noch verbreitert werden und andererseits ist zwischen den beiden Materialanhäufungen ein die Flexibilität des erfindungsgemäßen Wellrohres steigernde umfängliche dünnere Stelle bzw. ein entsprechender Bereich vorgesehen, der andererseits jedoch durch die gesteuerte Aufnahme des Kunststoffmaterials in der Form der beiden Materialanhäufungen nicht zu der Ausbildung eines radial einwärts vorstehenden axial nur sehr geringfügig erstreckten Bereiches führt, der ansonsten Kabelisolationen beispielsweise bei Motorvibrationen aufreiben könnte.

Nachfolgend wird zur Beschreibung der vorliegenden Erfindung auf die die Erfindung nicht beschreibende Ausführungsformen, die in den Figuren gezeigt sind Bezug genommen, wobei, insoweit die Erfindung beschrieben wird, weitere Merkmale und Vorteile gemäß der Erfindung offenbart werden. In den Darstellungen zeigen:
- Fig. 1: Einen Längsschnitt in Axialrichtung eines Elektroinstallationswellrohres;
- Fig. 2: Eine Ausführungsform aus dem Stand der Technik ebenfalls in einem axialen Längsschnitt;
- Fig. 3: Eine Ausführungsform in einer Draufsicht; und
- Fig. 3a: Einen Ausschnitt der Ausführungsform nach Fig. 3 gemäß der Einzelheit X in einem Längsschnitt.

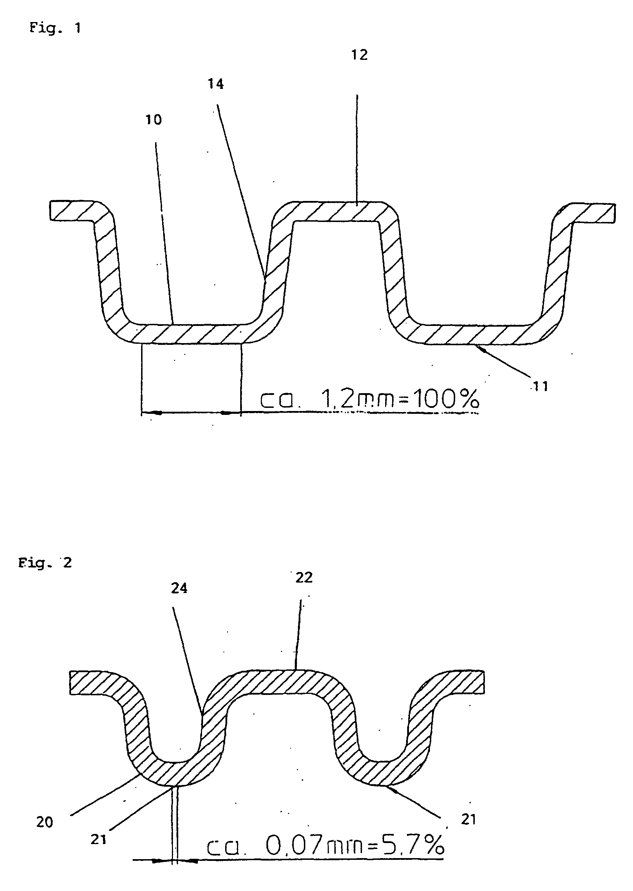

Die Fig. 2 zeigt eine übliche Wellungsform eines Elektroinstallationswellrohres gemäß dem Stand der Technik. An ein Wellental 20 schließt eine Flanke 24 an, die in einen Wellenberg 22 übergeht. Die Wellenberge 22 sind relativ breit ausgebildet, um das Wellrohr so flexibel wie möglich zu machen. Die Flanken 24 weisen einen veränderlichen Winkel auf und gehen in ein relativ schmales und in der Regel rund ausgebildetes Wellental über. Sämtliche Maßnahmen dienen dazu, eine möglichst hohe Beweglichkeit des Rohres gewährleisten zu können. Bei dieser Ausgestaltung ergibt sich nun zwischen einem innerhalb des Elektroinstallationswellrohres gemäß dem Stand der Technik verlegten Kabel oder Kabelbaums und dem Wellental 20 ein relativ schmaler, unter Umständen punktförmiger bzw. linienförmiger Berührungsbereich 21. Innerhalb dieses Bereiches treten bei Motorvibrationen und sonstigen Bewegungen einer Maschine oder eines Kraftfahrzeuges relativ hohe Belastungen einer Kabelinstallation auf, die dazu führen, dass die Isolation einer elektrischen Leitung innerhalb relativ kurzer Zeit beschädigt bzw. entfernt ist. Es kommt in Folge zu Kurzschlüssen und zum Ausfall des Kraftfahrzeuges bzw. der Maschine, etwa eine Werkzeugmaschine oder dgl.

Demgegenüber ist das Elektroinstallationswellrohr gemäß der Erfindung zu elektrischen Leitungen selbst in Dieselfahrzeugen sehr schonend, wobei gerade in Dieselfahrzeugen sehr starke Vibrationen auftreten können, die die Kabelisolationen bereits nach kurzer Zeit durchscheuern.

Bei dem Wellrohr nach der Fig. 1 ist ein Wellental 10 mit einem ebenen Bereich 11 am Innenumfang vorgesehen. Dieser ebene Bereich 11 liegt vollflächig an einem daraufliegenden Elektroinstallationskabel an und etwaige mechanische Belastungen aufgrund von Vibrationen werden großflächig verteilt, so dass kein Abrieb auftritt, bzw. ein etwaig auftretender Abrieb lediglich über Zeiträume eine Rolle spielt, die etwa in Bezug auf die Lebensdauer eines Kraftfahrzeuges keine Rolle spielen.

Die das Wellental 10 und einen Wellenberg 12 verbindende Flanke 14 ist relativ steil ausgebildet und der Wellenberg 12 ist im Vergleich zu dem Wellental 10 schmal. Der Wellenberg 12 wird nur noch derart ausgebildet um nach Möglichkeit die Minimalanforderungen an die Flexibilität eines entsprechenden Elektroinstallationswellrohres erfüllen zu können.

Gemäß der Erfindung können die Elektroinstallationswellrohre unabhängig von dem Material, aus dem sie hergestellt werden, Beschädigungen der Elektrokabel vermeiden, selbst wenn die Rohre aus PA-6 oder PT-Kunststoffen hergestellt sind, während gemäß dem Stand der Technik, beispielsweise gemäß Fig. 1 bei Rohren aus diesen Materialien häufig Schäden an Elektrokabeln aufgetreten sind.

Um die nötige Flexibilität des Wellrohres trotz eines möglichst großflächigen Bereiches 11 am Innenumfang eines Wellenberges 10 bereitstellen zu können, ist es nötig, dass abhängig von der Nennweite des Wellrohres die Wellenberge dennoch mindestens 1 mm hoch sind oder höher.

So hat sich gezeigt, dass beispielsweise bei einer Nennweite von 7,5 mm bzw. 10 mm eine Höhe des Wellenberges von ca. 1 mm ausreicht. Demgegenüber sollte beispielsweise bei einer Nennweite des Wellrohres von 13 mm, der Wellenberg ca. 1,3 bis 1,6 mm hoch sein. Bei einer Nennweite von 26 mm sollte der Wellenberg etwa 2 bis 4 mm hoch sein. Damit ergibt sich ein Verhältnis der Wellenberghöhe zur Nennweite von ca. 8 : 100 bis etwa 20 : 100 und in diesem bevorzugten Bereich lassen sich einerseits eine ausreichende Flexibilität und andererseits ein ausreichender Auflagebereich am Innenumfang des Wellrohres für die Elektroinstallationskabel bereitstellen.

Natürlich kann ein entsprechend ausgebildetes Rohr gemäß der Erfindung auch mit einem Längsschlitz ausgebildet sein, um Elektrokabel einlegen zu können bzw. entfernen zu können. Der Längsschlitz kann mit Verschlusseinrichtungen versehen sein, um den Schlitz öffnen bzw. verschließen zu können. Auch Ableitungen von dem Wellrohr gemäß Fig. 1 bzw. von einem Wellrohr gemäß der Erfindung, d.h. beispielsweise Warzen, die zur Öffnung des Wellrohres abgeschnitten werden können, um Kabel einzuleiten bzw. herauszuführen, können vorgesehen werden. Auch Stutzen, usw. können ein- oder angeformt werden. Das Wellrohr gemäß der Erfindung ist gleichermaßen vielseitig ausbildbar und einsetzbar, wobei jedoch der Vorteil zu erzielen ist, dass Vibrationen den im Prinzip zu schützenden Elektrokabeln keinen Schaden antun können.

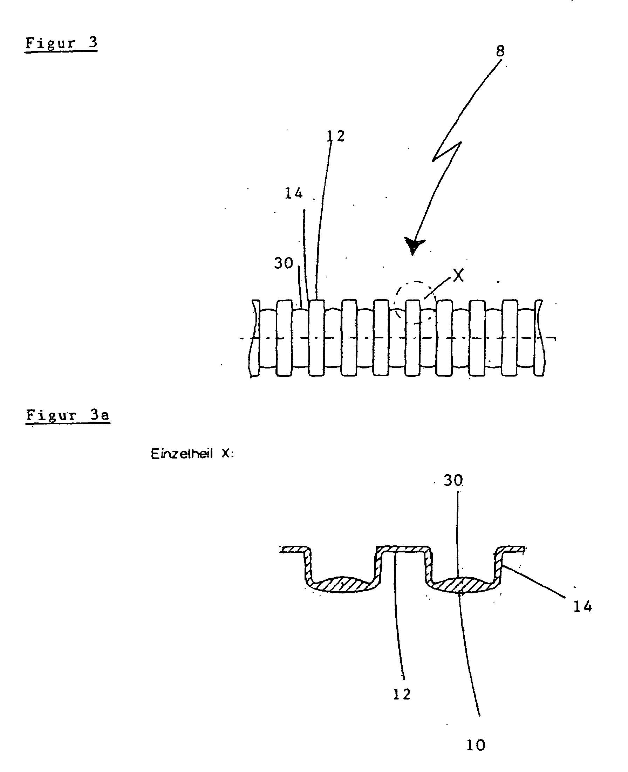

In Fig. 3 ist eine Ausführungsform 8 eines Elektroinstallationswellrohres zu erkennen. Das Wellrohr 8 weist diverse äquidistante Wellenberge 12 auf, die an ihren axialen Endabschnitten wiederum Flanken 14 vorzuweisen haben. In den Wellentälern 10 (siehe Fig. 3a) sind Erhebungen und damit Materialanhäufungen 30 erkennbar, deren allgemeine Form auch in Fig. 3a in einer Schnittdarstellung gezeigt ist. Wie zu sehen, ergibt sich hier eine gewisse Bombierung in dem Bereich der Materialanhäufung 30, wodurch Kunststoffmaterial bei der Korrugation aufgenommen werden kann. Dieses aufgenommene Kunststoffmaterial führt dazu, dass sich am Innenbereich des Wellrohres ein umfänglicher Flachbereich ausbildet, der bei auftreten von Vibrationen aufgrund eines laufenden Motors oder dgl., zu keinen Abrieberscheinungen an Isolationen von Elektrokabeln führen kann.

In Bezug auf Fig. 3 und 3a ist darauf hinzuweisen, dass die Formbacken eines Korrugators, mit dem das Profil gemäß den Fig. 3 und 3a ausgebildet wird, entsprechend dem Schnitt gemäß Fig. 3a ausgebildet sind, wobei die der Materialanhäufung bzw. Bombierung 30 zugeordnete Seite gemäß Fig. 3a die Struktur repräsentiert, die die Formbacken des Korrugators vorgeben.

An dieser Stelle ist darauf hinzuweisen, dass die Materialanhäufungen 30 gemäß der Erfindung anders aufzubauen ist, und zwar so, dass ausgehend von einer Flanke 14 zunächst eine relativ massive Materialanhäufung vorgesehen ist, die dann in Richtung der Mitte des Wellentales 10 wieder dünner wird, um ausgehend von der Mitte sodann wieder an Masse zuzunehmen und nahe der gegenüberliegenden Wellungsflanke 14 wieder zu verschwinden. Hierdurch ergeben sich dann beispielsweise zwei Materialanhäufungen in dem Wellental, die durch die Massereduktion im Bereich der Mitte des Wellentales zu einer erhöhten Flexibilität dieser Ausführungsform der Erfindung beitragen kann. Andererseits wird auch der Flachbereich bei einer solchen Ausführungsform verbreitert, so dass auch im Hinblick auf diese Zielsetzung gemäß der Erfindung Vorteile in einer zusätzlichen Strukturierung der Materialanhäufung 30 aufzufinden sein können.

## Patentansprüche

1. Elektroinstallationswellrohr mit einem Rohrkörper mit Wellenbergen (12) und Wellentälern (10), wobei die Wellentäler (10) mit einem in Axialrichtung des Rohrkörpers erstreckten umfänglichen Flachbereich (11) versehen sind, und in den Wellentälern (10) Materialanhäufungen (30) ausgebildet sind, **dadurch gekennzeichnet, dass**
die Materialanhäufung (30) ausgehend von einer Wellentalflanke (14) dicker ist und zur Mitte des Wellentales dieser Wellentalflanke abnimmt, um ausgehend von der Mitte dann wieder dicker zu werden, so dass im axialen Längsschnitt zwei Materialanhäufungen (30) vorgesehen sind.

2. Elektroinstallationswellrohr nach Anspruch 1, **dadurch gekennzeichnet, dass** Wellungsflanken (14) steil ausgebildet sind und von einer Radialen ausgehend von der Längserstreckungsrichtung des Rohres weniger als ungefähr bevorzugt 8 ° abweichen.

3. Elektroinstallationswellrohr nach einem der Ansprüche 1 oder 2, **dadurch gekennzeichnet, dass** der Flachbereich (11) wenigstens über einen Teilumfang des Rohrkörpers vorgesehen ist.

4. Elektroinstallationswellrohr nach einem der Ansprüche 1 bis 3, **dadurch gekennzeichnet, dass** die Breite eines Wellentales (10) zu der Breite eines Wellenberges (12) ein Verhältnis von 1 : 1 oder mehr, beispielsweise 1,5 : 1, 2 : 1, usw. hat.

5. Elektroinstallationswellrohr nach einem der Ansprüche 1 bis 4, **dadurch gekennzeichnet, dass** die Höhe eines Wellenberges bzw. die Flankenhöhe einer Wellung wenigstens 1 mm beträgt, bzw. dass das Verhältnis der Nennweite eines Elektroinstallationswellrohres zu dessen Wellenberghöhe 100 : 6 bis ca. 100 : 25 beträgt.

6. Verfahren zur Herstellung eines Elektroinstallationswellrohres, wobei ein Kunststoffmaterial aus einer Extrusionsdüse eines Extruders ausgetrieben wird und in einem im wesentlichen geschlossenen Formkanal eines Korrugators eingeleitet wird, wobei insbesondere die Formen bzw. Halbformen des Korrugators so strukturiert werden, dass diese umfängliche Flachbereiche (11) ausbilden, wobei bevorzugt die Strukturierung der Formbacken so erfolgt, dass sich radial auswärts erstreckte Bombierungen erzeugen lassen, durch die Materialanhäufungen (30) entstehen, **dadurch gekennzeichnet, dass** die Materialanhäufung (30) ausgehend von einer Wellentalflanke (14) dicker ist und zur Mitte des Wellentales dieser Wellentalflanke abnimmt, um ausgehend von der Mitte dann wieder dicker zu werden, so dass im axialen Längsschnitt zwei Materialanhäufungen (30) vorgesehen sind.

## Claims

1. A corrugated pipe for an electrical installation having a pipe body with corrugation crests (12) and corrugation troughs (10), the corrugation troughs (10) being provided with a extensive flat region (11) extended in the axial direction of the pipe body, and material accumulations (30) being formed in the corrugation troughs (10),
**characterised in that** starting from a wave trough flank (14) the material accumulation (30) is thicker and decreases towards the centre of the corrugation trough of this corrugation trough flank so that it again becomes thicker from the centre, with the result that two material accumulations (30) are provided in the axial longitudinal section.

2. A corrugated pipe for an electrical installation according to Claim 1,
**characterised in that** the corrugation flanks (14) have a steep construction and starting from a radial deviate from the direction of the longitudinal extension of the pipe less than preferably 8°.

3. A corrugated pipe for an electrical installation according to one of Claims 1 or 2,
**characterised in that** the flat region (11) is provided at least over a partial periphery of the pipe body.

4. A corrugated pipe for an electrical installation according to one of Claims 1 to 3,
**characterised in that** the width of a corrugation trough (10) to the width of a corrugation crest (12) has a ratio of 1:1 or more, for example 1.5:1.2:1, etc.

5. A corrugated pipe for an electrical installation according to one of Claims 1 to 4,
**characterised in that** the height of the corrugation crest and the flank height of a corrugation is at least 1 mm,
and **in that** the ratio of the nominal width of an electrical installation corrugated pipe to its corrugation crest height is 100:6 to approx 100:25.

6. A method for producing a corrugated pipe for an electrical installation, whereby a plastic material is expelled from an extrusion nozzle of. an extruder and is introduced into a substantially closed moulding channel of the corrugator, whereby in particular the moulds or half-moulds of the corrugator are structured so that they form extensive flat regions (11), whereby the structuring of the mould jaws preferably takes place so that radially outwardly extended bowed portions are produced, by which the material accumulations (30) are formed,
**characterised in that** starting from a corrugation trough flank (14) the material accumulation (30) is thicker and decreases towards the centre of the corrugation trough of this corrugation trough flank so that, starting from the centre, it then becomes thicker again, with the result that two material accumulations (30) are provided in the axial longitudinal section.

## Revendications

1. Tube ondulé pour installation électrique comportant un corps de tube avec des sommets d'ondes (12) et des creux d'ondes (10), les creux d'ondes (10) étant pourvus d'une zone plate (11) périphérique s'étendant dans la direction axiale du corps de tube, et des amas de matière (30) étant réalisés dans les creux d'ondes (10), **caractérisé en ce que** l'amas de matière (30), partant d'un flanc (14) d'un creux d'onde, est plus épais et diminue vers le milieu du creux d'onde de ce flanc, pour devenir à nouveau plus épais depuis le milieu, ce qui fait qu'en coupe axiale longitudinale sont prévus deux amas de matière (30).

2. Tube ondulé pour installation électrique selon la revendication 1, **caractérisé en ce que** des flancs (14) des ondulations sont réalisés raides et, partant d'une radiale, s'écartent de préférence de moins de 8° environ de la direction d'étendue longitudinale du tube.

3. Tube ondulé pour installation électrique selon l'une des revendications 1 ou 2, **caractérisé en ce que** la zone plate (11) est prévue au moins sur une partie du pourtour du corps de tube.

4. Tube ondulé pour installation électrique selon l'une des revendications 1 à 3, **caractérisé en ce que** la largeur d'un creux d'onde (10) est dans un rapport de 1:1 ou plus, par exemple 1,5:1,2:1, etc., par rapport à la largeur d'un sommet d'onde (12).

5. Tube ondulé pour installation électrique selon l'une des revendications 1 à 4, **caractérisé en ce que** la hauteur d'un sommet d'onde ou la hauteur du flanc d'une ondulation est d'au moins 1 mm, ou **en ce que** le rapport entre la largeur nominale d'un tube ondulé pour installation électrique et la hauteur de son sommet d'onde est de 100:6 à environ 100:25.

6. Procédé de fabrication d'un tube ondulé pour installation électrique, dans lequel une matière plastique est éjectée d'une filière d'extrusion d'une extrudeuse, et introduite dans un canal de moulage sensiblement fermé d'une machine à onduler, les moules ou demi-moules de la machine à onduler étant en particulier structurés de manière que ceux-ci réalisent des zones plates (11) périphériques, la structuration des empreintes de moule étant de préférence telles qu'il se forme des bombements s'étendant radialement vers l'extérieur qui donnent lieu à des amas de matière (30), **caractérisé en ce que** l'amas de matière (30), partant d'un flanc (14) d'un creux d'onde, est plus épais et diminue vers le milieu du creux d'onde de ce flanc, pour devenir à nouveau plus épais partant du milieu, de sorte qu'en coupe axiale longitudinale sont prévus deux amas de matière (30).
